# EUROPÄISCHE PATENTSCHRIFT

(11) **EP 3 327 202 B1**
(45) Veröffentlichungstag und Bekanntmachung des Hinweises auf die Patenterteilung: **19.06.2019**
(21) Anmeldenummer: 17203347.4
(22) Anmeldetag: 23.11.2017
(51) Int. Cl.: E02B 8/08

(54) **FISCHLIFT, ZUFLUSSEINRICHTUNG FÜR EINEN FISCHLIFT UND VERFAHREN ZUM BETRIEB EINES FISCHLIFTS**
FISH LIFT, INFEED DEVICE FOR A FISH LIFT AND METHOD FOR OPERATING A FISH LIFT
ASCENSEUR À POISSONS, DISPOSITIF D'ALIMENTATION POUR UN ASCENSEUR À POISSONS ET PROCÉDÉ DE FONCTIONNEMENT D'UN ASCENSEUR À POISSONS

(30) Priorität: 24.11.2016 DE 102016122662
(43) Veröffentlichungstag der Anmeldung: 30.05.2018
(73) Patentinhaber: Baumann, Georg, 88239 Wangen (DE)
(72) Erfinder: Baumann, Georg, 88239 Wangen (DE); Meyer, Stefan, 88239 Wangen (DE); Baumann, Torsten, 88239 Wangen (DE)
(74) Vertreter: Otten, Roth, Dobler & Partner mbB Patentanwälte

(56) Entgegenhaltungen:
- EP-A1- 3 073 016
- AT-B1- 515 291
- RU-C1- 2 451 132
- US-A- 4 431 340
- US-A1- 2016 076 212

## Beschreibung

Die Erfindung betrifft einen Fischlift und ein Verfahren zum Betrieb eines Fischlifts gemäß dem Oberbegriff des Anspruchs 1 bzw. 13.

Aus der EP 3 083 016 A1 ist ein Fischlift entsprechend dem Oberbegriff des Anspruch 1 bekannt.

Aus der AT 515 291 B1 ist eine Hebeeinrichtung für Fische und andere aquatische Lebewesen zur Überwindung des Niveauunterschieds zwischen dem Oberwasser und dem Unterwasser eines Querbauwerks in einem Fließgewässer bekannt, wobei die Hebeeinrichtung ein Schachtbauwerk aufweist, in dem eine mit einem Oberwasserverschluss verschließbare obere Öffnung, die in das Oberwasser mündet, und eine mit einem Unterwasserverschluss verschließbare untere Öffnung, die in das Unterwasser mündet, vorgesehen sind und in dem ein Gitterkorb zwischen einer unteren Position und einer oberen Position bewegbar ist, wobei ein mit dem Oberwasser kommunizierendes, mit einem Absperrorgan absperrbares Füllrohr in den unteren Bereich des Schachtbauwerks mündet.

Aus der US 2016/0076212 A1 ist eine Anordnung für fließende Gewässer im Bereich einer Querstruktur und/oder Wasserstruktur in Form eines Fischmigrationsbypasses zum Transport von Wassertieren, insbesondere Fischen, zwischen Unterwasser und Oberwasser mit einem im wesentlichen vertikalen Schacht bekannt. Der Wasserstand im Schacht ist zwischen dem Rücklaufwasser und dem Kopfwasserstand variabel. Ein korbartiger Transportbehälter, der im Schacht bewegt werden kann und auf dem Schacht zum Transport von Wassertieren vorgesehen ist, ist mit Schwimmern ausgestattet, die mit Luft gefüllt sind.

Aus der US 4,431,340 ist ein Mittel und ein Verfahren zum Transportieren von Fischen von einem unteren Gewässer zu einem höheren Gewässer bekannt. Die Einrichtung umfasst eine röhrenförmige Schleuse mit einem Eingangstor unterhalb des Niveaus des unteren Gewässers, durch das Fische in die Schleuse eindringen können, und einen Auslassdurchgang oberhalb des Niveaus des oberen Gewässers. Das Fischhebemittel in der Schleuse ist als Korb ausgebildet, der von einem Oberflächenschwimmer nach oben gezogen wird, wenn Wasser aus dem oberen Wasserkörper durch Schwerkraft in die geschlossene Schleuse fließt und diese bis zur Höhe des oberen Körpers füllt.

Schließlich ist aus der RU 2 451 132 C1 ein Fischturm für ein Hochdruck-Wasserwerk bekannt, der in Form eines offenen, abgestuften, geneigten oder geneigten Überlaufkanals ausgeführt ist.

Es ist Aufgabe der Erfindung, einen Fischlift bzw. ein Verfahren zum Betrieb eines Fischlifts vorzuschlagen, bei dem auch bei einer großen Höhendifferenz zwischen Oberwasser und Unterwasser von insbesondere mehr als 8 m eine fischgerechte Lockströmung erzeugbar ist.

Diese Aufgabe wird ausgehend von den Merkmalen des Oberbegriffs des Anspruchs 1 bzw. 13 durch die kennzeichnenden Merkmale des Anspruchs 1 bzw. 13 gelöst. In den jeweiligen Unteransprüchen sind vorteilhafte und zweckmäßige Weiterbildungen angegeben.

Ausgehend von einem Fischlift zum Transport von Fischen zwischen einem Oberwasser einer Staustufe und einem Unterwasser der Staustufe ist es vorgesehen, dass eine Zuflusseinrichtung erste Sperrmittel, eine Bypass-Leitung und druckreduzierende Mittel umfasst, wobei die ersten Sperrmittel in der Hauptleitung angeordnet sind und wobei die Bypass-Leitung derart angeordnet ist, dass durch diese die in der Hauptleitung angeordneten ersten Sperrmittel umgehbar sind und wobei die druckreduzierenden Mittel in der Bypass-Leitung angeordnet sind. Hierdurch ist es möglich, den Druck, mit welchem Wasser aus dem Oberwasser auf einem Niveau des Unterwassers in den Schacht bzw. den im Schacht befindlichen Behälter geleitet wird, derart um ein Vielfaches zu reduzieren, dass eine schwache, fischgerechte durch den Behälter in das Unterwasser strömende Lockströmung ausgebildet werden kann. Auf diese Weise ist es bei entsprechender Auslegung der in der Bypass-Leitung verbauten druckreduzierenden Mittel möglich, die Lockströmung unabhängig von einer zwischen dem Oberwasser und dem Unterwasser bestehenden Höhendifferenz von oftmals mehr als 8 m auf die Anforderungen der Fische anzupassen.

Erfindungsgemäß ist es dabei vorgesehen, dass die druckreduzierenden Mittel wenigstens zwei Expansionsräume umfassen, wobei eine orthogonal zu einer Strömungsrichtung gemessene Querschnittsfläche des ersten Expansionsraums wenigstens dreimal so groß ist wie eine orthogonal zu der Strömungsrichtung gemessene Querschnittsfläche eines in den ersten Expansionsraum mündenden Endabschnitts eines Bypass-Zulaufrohrs. Hierdurch lässt sich bei einer Höhendifferenz von Oberwasser und Unterwasser von z.B. 8 m mit einfachen Mitteln eine Druckreduzierungen von z.B. etwa 0,8 Bar auf unter 0,5 Bar realisieren.

Bei dem Fischlift kann es auch vorgesehen werden, eine orthogonal zu einer Strömungsrichtung gemessene Querschnittsfläche des zweiten Expansionsraums wenigstens zweimal so groß wie die orthogonal zu der Strömungsrichtung gemessene Querschnittsfläche des ersten Expansionsraums auszubilden, wobei der zweite Expansionsraum in einen Anfangsabschnitt eines Bypass-Ablaufrohrs mündet. Hierdurch lässt sich mit einfachen Mitteln bei einer Höhendifferenz von Oberwasser und Unterwasser von z.B. 8 m eine Druckreduzierung von z.B. etwa 0,8 Bar auf unter 0,5 Bar realisieren.

Insbesondere kann es bei dem Fischlift auch vorgesehen werden, dass die Hauptleitung der Zuflusseinrichtung ein Wasser zuführendes Zulaufrohr umfasst, wobei die Bypass-Leitung das Bypass-Zulaufrohr und das Bypass-Ablaufrohr umfasst, wobei die Bypass-Leitung mit dem Bypass-Zulaufrohr von dem Zulaufrohr abzweigt, wobei das Zulaufrohr an einen Einlass der ersten Sperrmittel angeschlossen ist und wobei das Zulaufrohr einen Durchmesser aufweist, welcher wenigstens das Doppelte eines Durchmessers des Bypass-Zulaufrohrs beträgt. Auf diese Weise müssen nur zwei unterschiedliche Rohrdurchmesser verbaut werden, so dass die Herstellung vereinfach ist.

Weiterhin kann es bei dem Fischlift auch vorgesehen werden, dass die Hauptleitung der Zuflusseinrichtung ein Wasser abführendes Ablaufrohr umfasst, wobei die Bypass-Leitung das Bypass-Zulaufrohr und das Bypass-Ablaufrohr umfasst, wobei die Bypass-Leitung mit dem Bypass-Ablaufrohr in das Ablaufrohr mündet, wobei das Ablaufrohr an einen Auslass der ersten Sperrmittel angeschlossen ist und wobei das Ablaufrohr und das Bypass-Ablaufrohr jeweils einen Durchmesser aufweisen, welcher einem Durchmesser des Zulaufrohrs der Hauptleitung entspricht. Auf diese Weise müssen nur zwei unterschiedliche Rohrdurchmesser verbaut werden, so dass die Herstellung vereinfach ist.

Bei dem Fischlift kann es auch vorgesehen werden, dass die Zuflusseinrichtung zweite Sperrmittel umfasst, wobei die zweiten Sperrmittel in der Bypass-Leitung und insbesondere in dem Bypass-Zulaufrohr angeordnet sind. Hierdurch ist es möglich, die Bypass-Leitung vollständig zu deaktivieren und in der Zeit, in welcher die Sperrmittel der Hauptleitung geöffnet sind, ein Einspülen von Verunreinigungen zu vermeiden.

Bei dem Fischlift kann es vorgesehen werden, die ersten Sperrmittel und/oder die zweiten Sperrmittel als Sperrschieber auszubilden. Sperrschieber stehen als zuverlässige und kostengünstige Standardbauteile zur Verfügung.

Außerdem kann es bei dem Fischlift vorgesehen werden, dass eine orthogonal zu einer Strömungsrichtung gemessene Querschnittsfläche des Bypass-Zulaufrohrs **weniger als 1/5** einer orthogonal zu der Strömungsrichtung gemessenen Querschnittsfläche des Zulaufrohrs der Hauptleitung beträgt. Hierdurch ist sichergestellt, dass der Bypass-Leitung nur ein um ein Vielfaches und wenigstens den **Faktor 3** reduzierter Volumenstrom zugeführt wird.

Bei dem Fischlift können die ersten und die zweiten Sperrmittel und die druckreduzierenden Mittel auf einer Höhe eines unteren Drittels des Schachtes angeordnet sein. Hierdurch besteht die Möglichkeit, diese mit hohem Druck zu spülen, ohne dass Zusatzeinrichtungen erforderlich sind.

Bei dem Fischlift kann auch vorgesehen werden, dass das Leitungssystem unterhalb eines Niveaus des Unterwassers in den Schacht und/oder in eine Einschwimmzone des Unterwassers mündet. Hierdurch kann auf eine spezielle Wasserführung innerhalb des Schachtes verzichtet werden und kann das Wasser direkt in den Schacht eingeleitet werden.

Insbesondere kann es bei dem Fischlift auch vorgesehen werden, das Leitungssystem derart in den Schacht münden zu lassen, dass Wasser, welches das Ablaufrohr der Hauptleitung durchfließt, eine Leitwasserdüse des Schachts durchströmt und einen Transportraum des Behälters durchströmt, wenn dieser in seiner unteren Stellung steht. Auf diese Art kann vollständig auf störende Einbauten in dem Schacht verzichtet werden.

Weiter kann es vorgesehen werden, eine Leitwasserleitung, welche in die Einschwimmzone des Unterwassers mündet, entweder zwischen dem Leitungseingang der Hauptleitung und dem ersten Sperrmitteln an die Hauptleitung anzuschließen oder zwischen den ersten Sperrmitteln und dem Leitungsausgang der Hauptleitung an die Hauptleitung anzuschließen. Die erste Ausführungsvariante ermöglicht es, die Leitwasserleitung und den Zufluss zu der Leitwasserdüse unabhängig voneinander zu betreiben, so dass die Leitwasserleitung auch während des Anhebens des Behälters betrieben werden kann. Die zweite Ausführungsvariante ermöglicht es, die Leitwasserleitung ähnlich wie die Hauptleitung zu dimensionieren und hierdurch Verstopfungen vorzubeugen, wobei im Stillstand des Behälters die Leitwasserleitung zur Ausbildung einer sanften Lockströmung über die Bypass-Einrichtung betrieben werden kann.

Schließlich kann es vorgesehen werden, dass die in der Bypass-Leitung angeordneten, druckreduzierenden Mittel eine Turbine und einen von dieser angetriebenen Generator umfassen. Hierdurch wird der Druck des die druckreduzierenden Mittel durchlaufenden Wasserstroms reduziert, so dass über die abgegriffene Leistung eine gewünschte Stärke der Lockströmung einstellbar ist und gleichzeitig Energie gewonnen wird.

Das erfindungsgemäße Verfahren zum Betrieb eines entsprechend dem Anspruch 1 ausgebildeten Fischlifts sieht vor,
- dass zum Anheben des Behälters aus der unteren Stellung in die obere Stellung die ersten Sperrmittel der Zuflusseinrichtung geöffnet werden und
- dass bei in der unteren Stellung befindlichem Behälter zum Herstellen einer Lockströmung die ersten Sperrmittel geschlossen werden und aus dem Oberwasser Wasser über die Bypass-Leitung und die darin angeordneten druckreduzierenden Mittel in den Schacht geleitet wird.

Hierdurch ist abhängig von den jeweiligen Anforderungen sowohl ein rasches Heben des Behälters als auch die Ausbildung einer schwachen Lockströmung möglich.

Es kann auch vorgesehen werden, ein zweites Sperrmittel, durch welches die Bypass-Leitung verschließbar ist, immer dann, wenn eine Lockströmung herzustellen ist, von einem dem zweiten Sperrmittel zugeordneten Stellglied mittels eines Reglers in Abhängigkeit von einer von einer Messeinrichtung erfassten Fließgeschwindigkeit der Lockströmung so einzustellen, dass eine vorgegebene Fließgeschwindigkeit konstant gehalten wird, wobei es insbesondere vorgesehen ist, dass eine tatsächliche Öffnungsstellung des zweiten Sperrmittels durch eine Erfassungseinrichtung erfasst wird und an den Regler geleitet wird. Hierdurch ist es möglich, die Fließgeschwindigkeit der Lockströmung in einem konstanten Bereich zu halten, auch wenn die Zuflusseinrichtung beispielsweise durch Wellenbewegungen im Oberwasser oder ähnliche Einflüsse beschleunigt oder verlangsamt wird.

Bei dem Fischlift kann es vorgesehen werden, dass die Zuflusseinrichtung ein dem zweiten Sperrmittel zugeordnetes Stellglied, einen Regler und eine Messeinrichtung zur Erfassung eine Fließgeschwindigkeit der Lockströmung umfasst, wobei der Regler mit dem Stellglied und der Messeinrichtung verbunden ist, so dass dieser in Abhängigkeit von den Messdaten der Messeinrichtung Regeldaten an das Stellglied ausgibt, wobei es insbesondere vorgesehen ist, dass die Zuflusseinrichtung auch eine Erfassungseinrichtung umfasst, welche eine tatsächlichen Öffnungsstellung des zweiten Sperrmittels erfasst und zur Übergabe von Öffnungsdaten an den Regler angeschlossen ist. Durch eine derartige Ausgestaltung ist es möglich, die Fließgeschwindigkeit der Lockströmung in einem konstanten Bereich zu halten, auch wenn die Zuflusseinrichtung beispielsweise durch Wellenbewegungen im Oberwasser oder ähnliche Einflüsse beschleunigt oder verlangsamt wird.

Im Sinne der Erfindung wird unter einer Lockströmung eine Strömung verstanden, welche geeignet ist, für Fische eine Fließrichtung eines Gewässers erkennbar zu machen, ohne die Fische mit dem Anschwimmen gegen die Strömung zu stark zu belasten. Die Lockströmung weist vorzugweise eine Fließgeschwindigkeit von etwa 0,5 m/s auf.

Weitere Einzelheiten der Erfindung werden in der Zeichnung anhand eines schematisch dargestellten Ausführungsbeispiels beschrieben.

Hierbei zeigt:
- Figur 1:: eine schematische Seitenansicht eines erfindungsgemäßen Fischlifts, wobei ein Behälter gehoben wird und eine mittlere Stellung durchfährt;
- Figur 2:: eine schematische Seitenansicht des in der Figur 1 gezeigten Fischlifts, wobei der Behälter in einer unteren Stellung steht und eine Lockströmung ausgebildet ist;
- Figur 3:: eine vergrößerte Einzeldarstellung der in den Figuren 1 und 2 gezeigten Zuflusseinrichtung;
- Figur 4:: eine perspektivische Ansicht einer konstruktiven Ausgestaltung eines Teils der in den Figuren 1 bis 3 gezeigten Zuflusseinrichtung und
- Figur 5:: eine Seitenansicht des in der Figur 4 gezeigten Teils der Zuflusseinrichtung aus einer Pfeilrichtung V.

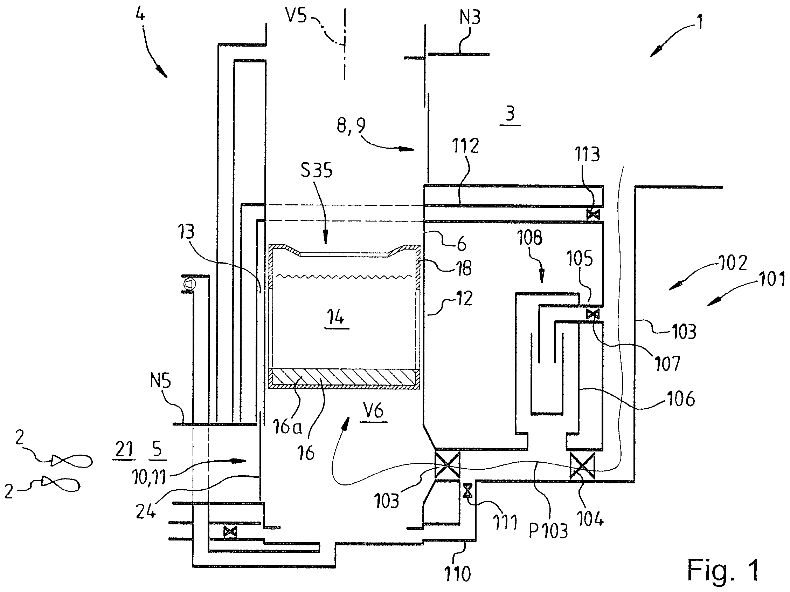

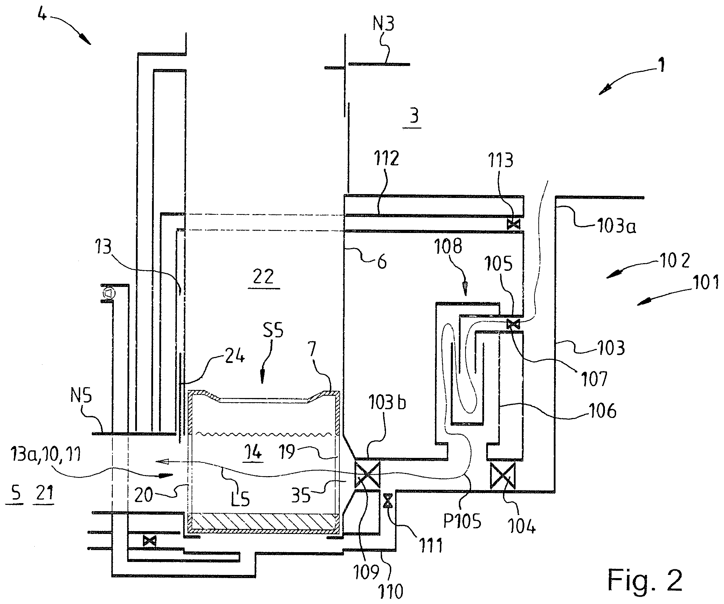

Die Figuren 1 und 2 zeigen einen Fischlift 1 bei auf einem Niveau N5 stehendem Unterwasser 5 in zwei unterschiedlichen Stellungen. Hierbei ist der Fischlift 1 bzw. eine Staustufe 4, in welche der Fischlift 1 integriert ist, in schematischen, geschnittenen Seitenansichten gezeigt. Zunächst wird der Fischlift 1 in seiner grundsätzlichen Funktion beschrieben.

Der Fischlift 1 ist zum Transport von Fischen 2 zwischen einem Oberwasser 3 der Staustufe 4 und dem Unterwasser 5 der Staustufe 4 vorgesehen. Der Fischlift 1 umfasst einen Schacht 6 und einen Behälter 7. Hierbei umfasst der Schacht 6 eine unter einem Niveau N3 des Oberwassers 3 liegende obere Öffnung 8 mit einem oberen Schleusenausgang 9. Weiterhin umfasst der Schacht 6 eine unter dem Niveau N5 des Unterwassers 5 liegende untere Öffnung 10 mit einem unteren Schleuseneingang 11. Der Behälter 7 ist zwischen einer nicht gezeigten oberen Stellung, in welcher dieser vor dem oberen Schleuseneingang 9 schwimmt und einer in der Figur 2 gezeigten unteren Stellung S5, in welcher dieser vor dem unteren Schleuseneingang 11 steht, verfahrbar. In dem Schacht 6 ist der Behälter 7 an zwei sich gegenüber liegenden Schienen 12, 13 geführt. Der Behälter 7 ist derart geformt, dass dieser die beiden Schienen 12 ,13 derart umgreift, dass der Behälter 7 im Schacht 6 vertikal verfahrbar, aber um eine Vertikalachse V5 unverdrehbar ist. Der Behälter 7 umfasst einen Transportraum 14. Der Transportraum 14 bildet ein Becken 15. Das Becken 15 weist einen Beckenboden 16 mit einem Schwimmkörper 16a auf. Hierdurch weist der Behälter 7 als Schwimmbehälter 7a so viel Auftrieb auf, dass dieser bei in dem Schacht 6 steigendem Wasserstand in seine obere Stellung in einem in dem Schacht 6 eingeschlossenen Wasservolumen V6 schwimmt, wobei der Transportraum 14 hierbei, wie aus der Figur 1 ersichtlich ist, immer bis über seine halbe Höhe mit Wasser gefüllt ist. In seiner Wandung 18 weist der Behälter 7 eine erste seitliche Öffnung 19 und eine zweite seitliche Öffnung 20 auf, welche in den Transportraum 14 führen. Hierbei ist die Öffnung 19 des Behälters 7 auf die obere Öffnung 8 des Schachts 6 ausgerichtet, wenn der Behälter 7 in seiner oberen Stellung steht und hierbei ist die Öffnung 20 des Behälters 7 auf die untere Öffnung 10 des Schachts 6 ausgerichtet, wenn der Behälter 7 in seine unteren Stellung S5 steht (siehe Figur 2). Wie aus der Figur 2 ersichtlich ist, liegt die zweite seitliche Öffnung 20 in der Stellung S5 unter dem Niveau N5 des Unterwassers 5 und führt in das Unterwasser 5 bzw. eine Einschwimmzone 21. Die zweite seitliche Öffnung 20 des Behälters 7 liegt in dessen unterer Stellung S5 dem Schleuseneingang 11 und der unteren Öffnung 10 des Schachts 6 derart gegenüber, dass bei geöffnetem Schleuseneingang 11 eine gegenüber dem den Behälter 7 umgebenden Innenraum 22 des Schachts 6 abgeschirmte Verbindung zum Unterwasser 5 besteht. Der Schleuseneingang 11 ist in der zweiten Schiene 13 ausgebildet, wobei diese zweite Schiene 13 eine auf die Öffnung 20 des Behälters 7 ausgerichtete untere Schienenöffnung 13a aufweist. Hierbei umfasst der Schleuseneingang 11, die Öffnung 10, welche als Rohrabschnitt ausgeführt ist und ein Sperrglied 24.

In der Figur 2 steht das Sperrglied 24 in einer hochgezogenen Stellung, so dass für die Fische 2 der Weg zwischen dem Unterwasser 5 und dem Transportraum 14 des Behälters 7 freigegeben ist. In dem Transportraum 14 des Behälters 7 und in der Einschwimmzone 21 des Unterwassers 5 wird bei in der unteren Stellung S5 stehendem Behälter 7 und offenem Schleuseneingang 11 eine Lockströmung L5 über eine Zuflusseinrichtung 101 hergestellt. Die Zuflusseinrichtung 101 ist als Fischliftzuflusseinrichtung ausgebildet und umfasst ein Leitungssystem 102. Das Leitungssystem 102 umfasst eine Hauptleitung 103. Diese ist mit einem Leitungseingang 103a an das Oberwasser 3 und ist mit einem Leitungsausgang 103b an eine Leitwasserdüse 35 angeschlossen. Hierbei ist die Leitwasserdüse 35 unter dem Niveau N5 des Unterwassers 5 im Schacht 6 derart angeordnet, dass diese bei in der unteren Stellung S5 stehendem Behälter 7 (siehe Figur 2) dessen erster seitlicher Öffnung 19 gegenüberliegt. Entsprechend wird aus der Leitwasserdüse 35 austretendes Wasser in den Transportraum 14 des Behälters 7 geleitet.

Die Zuflusseinrichtung 101 umfasst weiterhin ein erstes Sperrmittel 104, eine Bypass-Leitung 105 und druckreduzierende Mittel 106. Hierbei ist das erste Sperrmittel 104 in der Hauptleitung 103 zwischen dessen Leitungseingang 103a und dessen Leitungsausgang 103b angeordnet. Die Bypass-Leitung 105 ist derart angeordnet ist, dass durch diese die in der Hauptleitung 103 angeordneten Sperrmittel 104 umgehbar sind und die druckreduzierenden Mittel 106 sind in der Bypass-Leitung angeordnet.

Um die in der Figur 2 symbolisch angedeutete Lockströmung L5 zu erzeugen, sind die ersten Sperrmittel 104, welche als sogenannter Plattenschieber ausgebildet sind, geschlossen. Hierdurch kann das Wasser von dem Leitungseingang 103a zu dem Leitungsausgang 103b nur über die Bypass-Leitung 105 strömen, wobei optional in der Bypass-leitung 105 vorhandene zweite Sperrmittel 107, welche ebenfalls als Plattenschieber ausgebildet sind, hierzu geöffnet sind. Auf diesem Weg des Wassers, welcher mit einem schlangenförmig verlaufenden Pfeil P105 angedeutet ist, muss das Wasser auch die druckreduzierenden Mittel 106, welche als Strömungsdämpfer ausgebildet sind, durchfließen. Dadurch, dass das Wasser eine Bypass-Einrichtung 108, welche durch die Bypass-Leitung 105 und die druckreduzierenden Mittel 106 gebildet ist, durchfließt, werden ein der Leitwasserdüse 35 zugeführter Volumenstrom des Wassers und ein Druck dieses Wassers im Vergleich zu einer Versorgung der Leitwasserdüse 35 über die Hauptleitung 103 reduziert. Somit ist sichergestellt, dass von der Leitwasserdüse 35 ausgehend bei in der unteren Stellung S5 stehendem Behälter 7 und bei geöffnetem Sperrglied 24 im Transportraum 14 des Behälters 7 und in der Einschwimmzone 21 des Unterwassers 5 eine fischgerechte, schwache Leit- bzw. Lockströmung L5 gebildet werden kann, welche flussaufwärts strebende Fische motiviert, in den Behälter 7 einzuschwimmen. Im Bereich des Leitungsausgangs 103b sind optional vorhandene dritte Sperrmittel 109 gezeigt, welche ebenfalls als Sperrschieber ausgebildet sind. Die dritten Sperrmittel 109 sind insbesondere vorgesehen, um beispielsweise bei einer Wartung der Zuflusseinrichtung 101 eine Rückströmung von Wasser aus dem Schacht 6 zu verhindern. Die dritten Sperrmittel 109 sind alternativ oder zusätzlich insbesondere auch dazu vorgesehen, sicherzustellen, dass das Wasser nicht der Leitwasserdüse 35, sondern einer optional vorhandenen Spülleitung 110 zugeführt wird, wenn ein Spülvorgang vorgesehen ist. Über die Spülleitung ist ein Freispülen eines Bodenraums 6a des Schachts 6 möglich. Bei einem Spülvorgang steht der Behälter 7 vorzugsweise in seiner unteren Stellung S5. Abhängig davon wie stark gespült werden soll, ist hierzu dann das erste Sperrmittel 104 geöffnet oder geschlossen. Ein Zufluss zu der Spülleitung 110 wird über vierte Sperrmittel 111 geregelt, welche ebenfalls als Plattenschieber ausgebildet sind.

Die Zuflusseinrichtung 101 umfasst optional noch eine Leitwasserleitung 112 und dieser zugeordnete fünfte Sperrmittel 113, welche als Plattenschieber ausgebildet sind. Die Leitwasserleitung 112 ist zwischen dem Leitungseingang 103a und der Bypass-Einrichtung 108 an die Hauptleitung 103 angeschlossen und mündet im Bereich der Einschwimmzone 21 in das Unterwasser 5, so dass auch bei geschlossenem Sperrglied 24 im Unterwasser 5 eine Lockströmung aufrechterhalten werden kann, welche den flussaufwärts schwimmenden Fischen den Weg weist. Gemäß einer nicht dargestellten Ausführungsvariante ist es vorgesehen, dass die Leitwasserleitung 112 zwischen den ersten Sperrmitteln 104 und dem Leitungsausgang 103b der Hauptleitung 103 an die Hauptleitung 103 angeschlossen ist. Hierdurch ist es möglich, mittels der Bypass-Einrichtung 108 den Volumenstrom und den Druck des der Leitwasserleitung 112 zugeführten Wassers zu reduzieren.

Eine Wasserzufuhr in den Schacht 6 entsprechend dem in der Figur 1 gezeigten Pfeil 103 ist immer dann vorgesehen, wenn der Behälter 7 zügig aus seiner unteren Stellung S5 (siehe Figur 2) in die bereits beschriebene obere Stellung angehoben werden soll. Hierzu sind dann die ersten Sperrmittel 104 und die optional vorhandenen dritten Sperrmittel 109 geöffnet, sowie die optional vorhandenen vierten Sperrmittel 111 geschlossen und die fünften Sperrmittel 113 geöffnet. Die Figur 1 zeigt eine Momentaufnahme, in welcher der Behälter 7 gerade eine mittlere Stellung S35 durchfährt.

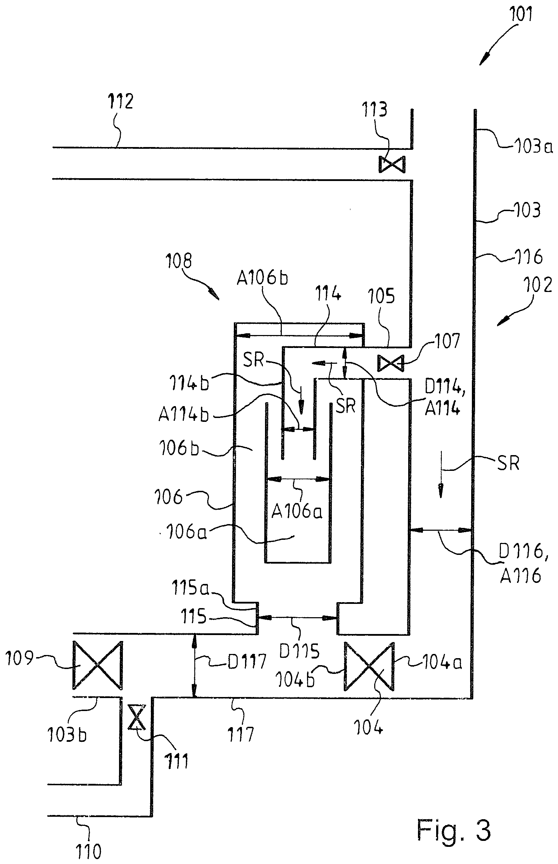

In der Figur 3 ist die aus den Figuren 1 und 2 bekannten Zuflusseinrichtung dann nochmals vergrößert in Alleinstellung gezeigt. Die druckreduzierenden Mittel 106 umfassen zwei Expansionsräume 106a, 106b. Hierbei ist eine orthogonal zu einer Strömungsrichtung SR gemessene Querschnittsfläche A106a des ersten Expansionsraums 106a wenigstens dreimal so groß wie eine orthogonal zu der Strömungsrichtung SR gemessene Querschnittsfläche A114b eines in den ersten Expansionsraum 106a mündenden Endabschnitts 114b eines Bypass-Zulaufrohrs 114.

Weiterhin ist eine orthogonal zu der Strömungsrichtung SR gemessene Querschnittsfläche A106b des zweiten Expansionsraums 106b wenigstens zweimal so groß wie die orthogonal zu der Strömungsrichtung SR gemessene Querschnittsfläche A106a des ersten Expansionsraums 106a, wobei der zweite Expansionsraum in einen Anfangsabschnitt 115a eines Bypass-Ablaufrohrs 115 mündet.

Die Hauptleitung 103 der Zuflusseinrichtung 101 umfasst ein Wasser zuführendes Zulaufrohr 116, wobei die Bypass-Leitung 105 das Bypass-Zulaufrohr 114 und das Bypass-Ablaufrohr 115 umfasst, wobei die Bypass-Leitung 105 mit dem Bypass-Zulaufrohr 114 von dem Zulaufrohr 116 abzweigt, wobei das Zulaufrohr 116 an einen Einlass 104a der ersten Sperrmittel 104 angeschlossen ist und wobei das Zulaufrohr 116 einen Durchmesser D116 aufweist, welcher wenigstens das Doppelte eines Durchmessers D114 des Bypass-Zulaufrohrs 114 beträgt. Ebenso umfasst die Hauptleitung 103 der Zuflusseinrichtung 101 ein Wasser abführendes Ablaufrohr 117, wobei die Bypass-Leitung 105 das Bypass-Zulaufrohr 114 und das Bypass-Ablaufrohr 115 umfasst, wobei die Bypass-Leitung 105 mit dem Bypass-Ablaufrohr 115 in das Ablaufrohr 117 mündet, wobei das Ablaufrohr 117 an einen Auslass 104b der ersten Sperrmittel 104 angeschlossen ist und wobei das Ablaufrohr 117 und das Bypass-Ablaufrohr 115 jeweils einen Durchmesser D117 bzw. D115 aufweisen, welcher einem Durchmesser D116 des Zulaufrohrs 116 der Hauptleitung entspricht.

Das zweite Sperrmittel 107 ist in dem Bypass-Zulaufrohr 116 angeordnet.

Die orthogonal zu der Strömungsrichtung SR gemessene Querschnittsfläche A114a des Bypass-Zulaufrohrs 114 beträgt weniger als 1/5 einer orthogonal zu der Strömungsrichtung SR gemessenen Querschnittsfläche A116 des Zulaufrohrs 116 der Hauptleitung 103.

Die ersten und zweiten Sperrmittel 104, 107 und die druckreduzierenden Mittel 106 sind auf einer Höhe eines unteren Drittels des Schachtes 6 (siehe Figuren 1, 2) angeordnet sind.

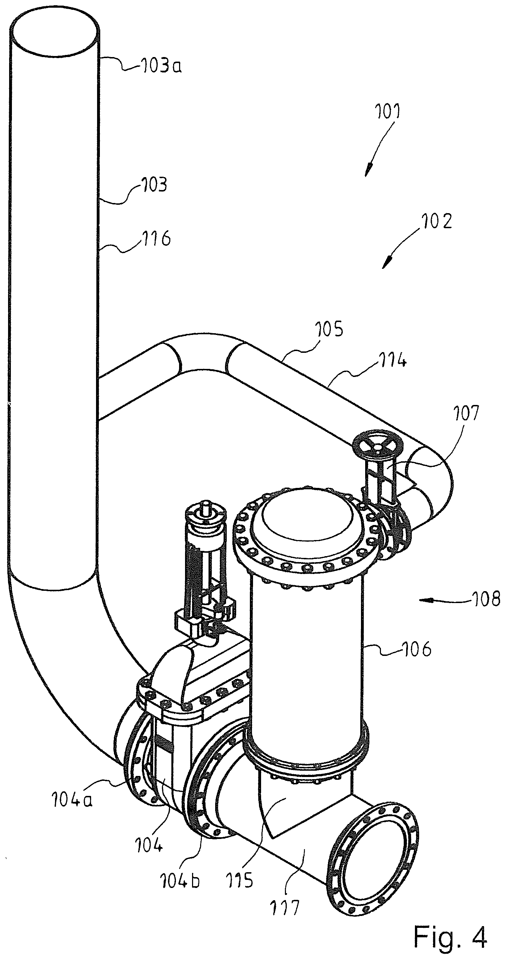

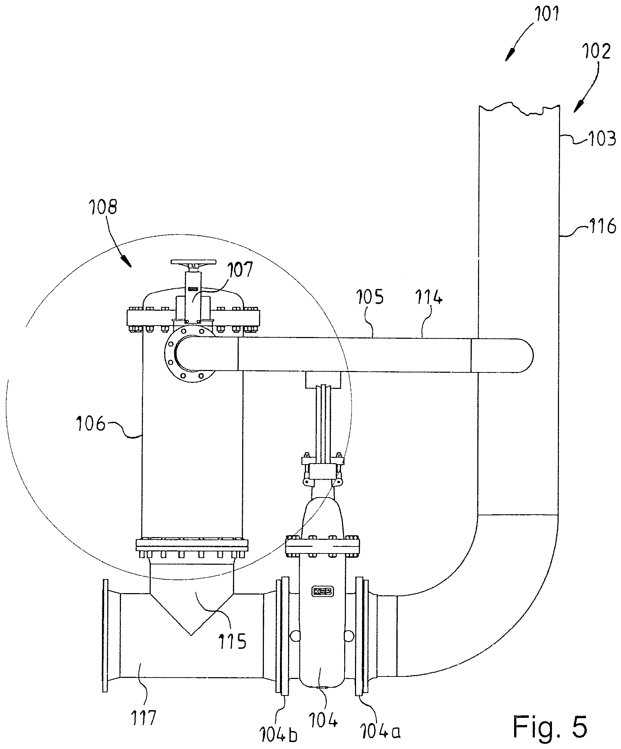

Die Figuren 4 und 5 zeigen eine den Figuren 1 bis 3 entsprechende konstruktive Ausgestaltung der Zuflusseinrichtung 101, wobei zur Erhaltung der Übersichtlichkeit auf eine Darstellung der Leitwasserleitung 112, des fünften Sperrmittels 113, der Spülleitung 110, des vierten Sperrmittels 111 sowie des dritten Sperrmittels 109 verzichtet wurde. Hinsichtlich der Figuren 4 und 5 wird ausdrücklich auf die Beschreibung zu den Figuren 1 bis 3 verwiesen.

### Bezugszeichenliste:

- 1: Fischlift
- 2: Fisch
- 3: Oberwasser
- 4: Staustufe
- 5: Unterwasser
- 6: Schacht
- 6a: Bodenraum von 6
- 7: Behälter
- 7a: Schwimmbehälter
- 8: obere Öffnung in 5
- 9: Schleusenausgang
- 10: untere Öffnung in 5
- 11: Schleuseneingang
- 12,13: Schiene
- 13a: Schienenöffnung
- 14: Transportraum
- 15: Becken
- 16: Beckenboden
- 16a: Schwimmkörper
- 17: - nicht belegt -
- 18: Wandung von 7
- 19: erste seitliche Öffnung
- 20: zweite seitliche Öffnung
- 21: Einschwimmzone
- 22: Innenraum
- 23: - nicht belegt -
- 24: Sperrglied
- 25-34: - nicht belegt -
- 35: Leitwasserdüse

- L5: Lockströmung
- N3: Niveau des Oberwassers
- N5: Niveau des Unterwassers
- P103: Pfeil
- P105: Pfeil
- S5: untere Stellung von 7
- S35: mittlere Stellung von 7
- V5: Vertikalachse von 5
- V6: Wasservolumen im Schacht

- 101: Zuflusseinrichtung
- 102: Leitungssystem
- 103: Hauptleitung
- 103a: Leitungseingang von 103
- 103b: Leitungsausgang von 103
- 104: erste Sperrmittel
- 104a: Einlass von 104
- 104b: Auslass von 104
- 105: Bypass-Leitung
- 106: druckreduzierenden Mittel
- 106a, 106b: erster, zweiter Expansionsraum
- 107: zweite Sperrmittel
- 108: Bypass-Einrichtung
- 109: dritte Sperrmittel
- 110: Spülleitung
- 111: vierte Sperrmittel
- 112: Leitwasserleitung
- 113: fünfte Sperrmittel
- 114: Bypass-Zulaufrohr
- 114b: Endabschnitt von 114
- 115: Bypass-Ablaufrohr
- 115a: Anfangsabschnitt von 115
- 116: Zulaufrohr von 103
- 117: Ablaufrohr von 103

- A106a: Querschnittsfläche von 106a
- A106b: Querschnittsfläche von 106b
- A114b: Querschnittsfläche von 114b
- A116: Querschnittsfläche von 116
- D114: Durchmesser von 114
- D116: Durchmesser von 116
- D117: Durchmesser von 117
- SR: Strömungsrichtung

## Patentansprüche

1. Fischlift (1) zum Transport von Fischen (2) zwischen einem Oberwasser (3) einer Staustufe (4) und einem Unterwasser (5) der Staustufe (4) umfassend
- einen Schacht (6) und einen Behälter (7),
- wobei der Schacht (6) eine unter einem Niveau (N5) des Unterwassers (5) liegende untere Öffnung (10) mit einem unteren Schleuseneingang (11) umfasst,
- wobei der Behälter (7) zwischen einer oberen Stellung (S3) und einer unteren Stellung (S5) verfahrbar ist,
- wobei der Behälter (7) als Schwimmbehälter (7a) ausgebildet ist, welcher seine Stellungen (S3; S35) im Schacht (6) in Abhängigkeit von einem im Schacht (6) vorhandenen Schachtwasserstand einnimmt,
- wobei der Behälter (7) durch Wasserabfluss aus einem in dem Schacht (6) eingeschlossenen Wasservolumen (V6) abgesenkt wird oder wobei der Behälter (7) durch Wasserzufluss zu dem in dem Schacht (6) eingeschlossenen Wasservolumen (V6) angehoben wird,
- wobei der Wasserzufluss mittels einer Zuflusseinrichtung (101) erfolgt,
- wobei die Zuflusseinrichtung (101) ein Leitungssystem (102) umfasst,
- wobei das Leitungssystem (102) an das Oberwasser (3) angeschlossen ist und eine Hauptleitung (103) umfasst, welche in den Schacht (6) mündet,
- wobei die Zuflusseinrichtung (101) erste Sperrmittel (104), eine Bypass-Leitung (105) und druckreduzierende Mittel (106) umfasst,
- wobei die ersten Sperrmittel (104) in der Hauptleitung (103) angeordnet sind und wobei die Bypass-Leitung (105) derart angeordnet ist, dass durch diese die in der Hauptleitung (103) angeordneten ersten Sperrmittel (104) umgehbar sind und
- wobei die druckreduzierenden Mittel (106) in der Bypass-Leitung (105) angeordnet sind, **dadurch gekennzeichnet, dass** die druckreduzierenden Mittel (106) wenigstens zwei Expansionsräume (106a, 106b) umfassen, wobei eine orthogonal zu einer Strömungsrichtung (SR) gemessene Querschnittsfläche des ersten Expansionsraums (A106a) wenigstens dreimal so groß ist wie eine orthogonal zu der Strömungsrichtung (SR) gemessene Querschnittsfläche (A114b) eines in den ersten Expansionsraum (106a) mündenden Endabschnitts (114b) eines Bypass-Zulaufrohrs (114).

2. Fischlift nach Anspruch 1, **dadurch gekennzeichnet, dass** eine orthogonal zu einer Strömungsrichtung (SR) gemessene Querschnittsfläche (A106b) des zweiten Expansionsraums (106b) wenigstens zweimal so groß ist wie die orthogonal zu der Strömungsrichtung (SR) gemessene Querschnittsfläche (A106a) des ersten Expansionsraums (106a), wobei der zweite Expansionsraum (106b) in einen Anfangsabschnitt (115a) eines Bypass-Ablaufrohrs (115) mündet.

3. Fischlift nach Anspruch 1 oder 2, **dadurch gekennzeichnet, dass** die Hauptleitung (103) der Zuflusseinrichtung (101) ein Wasser zuführendes Zulaufrohr (116) umfasst, wobei die Bypass-Leitung (105) das Bypass-Zulaufrohr (114) und das Bypass-Ablaufrohr (115) umfasst, wobei die Bypass-Leitung (105) mit dem Bypass-Zulaufrohr (114) von dem Zulaufrohr (116) abzweigt, wobei das Zulaufrohr (116) an einen Einlass (104a) der ersten Sperrmittel (104) angeschlossen ist und wobei das Zulaufrohr (116) einen Durchmesser (D116) aufweist, welcher wenigstens das Doppelte eines Durchmessers (D114) des Bypass-Zulaufrohrs (114) beträgt.

4. Fischlift nach Anspruch 1, 2 oder 3, **dadurch gekennzeichnet, dass** die Hauptleitung (103) der Zuflusseinrichtung (101) ein Wasser abführendes Ablaufrohr (117) umfasst, wobei die Bypass-Leitung (105) das Bypass-Zulaufrohr (114) und das Bypass-Ablaufrohr (115) umfasst, wobei die Bypass-Leitung (105) mit dem Bypass-Ablaufrohr (115) in das Ablaufrohr (117) mündet, wobei das Ablaufrohr (117) an einen Auslass (104b) der ersten Sperrmittel (104) angeschlossen ist und wobei das Ablaufrohr (117) und das Bypass-Ablaufrohr (115) jeweils einen Durchmesser (D117 bzw. D115) aufweisen, welcher einem Durchmesser (D116) des Zulaufrohrs (116) der Hauptleitung (103) entspricht.

5. Fischlift nach Anspruch 1, 2, 3, oder 4, **dadurch gekennzeichnet, dass** die Zuflusseinrichtung (101) zweite Sperrmittel (107) umfasst, wobei die zweiten Sperrmittel (107) in der Bypass-Leitung (105) und insbesondere in dem Bypass-Zulaufrohr (114) angeordnet sind, dass es insbesondere vorgesehen ist, dass die Zuflusseinrichtung (101) ein dem zweiten Sperrmittel zugeordnetes Stellglied, einen Regler und eine Messeinrichtung zur Erfassung eine Fließgeschwindigkeit der Lockströmung (L5) umfasst, wobei es insbesondere vorgesehen ist, dass der Regler mit dem Stellglied und der Messeinrichtung verbunden ist, so dass dieser in Abhängigkeit von den Messdaten der Messeinrichtung Regeldaten an das Stellglied ausgibt, wobei es besonders bevorzugt vorgesehen ist, dass die Zuflusseinrichtung (101) auch eine Erfassungseinrichtung umfasst, welche eine tatsächlichen Öffnungsstellung des zweiten Sperrmittels (107) erfasst und zur Übergabe von Öffnungsdaten an den Regler angeschlossen ist.

6. Fischlift nach Anspruch 1, 2, 3, 4, oder 5, **dadurch gekennzeichnet, dass** die ersten Sperrmittel (104) und/oder die zweiten Sperrmittel (107) als Sperrschieber ausgebildet sind.

7. Fischlift nach Anspruch 1, 3, 3, 4, 5, oder 6, **dadurch gekennzeichnet, dass** eine orthogonal zu einer Strömungsrichtung (SR) gemessene Querschnittsfläche (A114) des Bypass-Zulaufrohrs (114) weniger als 1/5 einer orthogonal zu der Strömungsrichtung (SR) gemessenen Querschnittsfläche (A116) des Zulaufrohrs (116) der Hauptleitung (103) beträgt.

8. Fischlift nach Anspruch 5, 6, oder 7, **dadurch gekennzeichnet, dass** die ersten und die zweiten Sperrmittel (104, 107) und die druckreduzierenden Mittel (106) auf einer Höhe eines unteren Drittels des Schachtes (6) angeordnet sind.

9. Fischlift nach Anspruch 1, **dadurch gekennzeichnet, dass** das Leitungssystem (102) unterhalb eines Niveaus (N5) des Unterwassers (5) in den Schacht (6) und/oder in eine Einschwimmzone (21) des Unterwassers mündet.

10. Fischlift nach Anspruch 9, **dadurch gekennzeichnet, dass** das Leitungssystem (102) derart in den Schacht (6) mündet, dass Wasser, welches das Ablaufrohr (117) der Hauptleitung (103) durchfließt, eine Leitwasserdüse (35) des Schachts (6) durchströmt und einen Transportraum (14) des Behälters (7) durchströmt, wenn dieser in seiner unteren Stellung (S5) steht.

11. Fischlift nach Anspruch 9 oder 10, **dadurch gekennzeichnet, dass** eine Leitwasserleitung (112), welche in die Einschwimmzone (21) des Unterwassers (5) mündet,
- entweder zwischen dem Leitungseingang (103a) der Hauptleitung (103) und dem ersten Sperrmitteln (104) an die Hauptleitung (103) angeschlossen ist
- oder zwischen den ersten Sperrmitteln (104) und dem Leitungsausgang (103b) der Hauptleitung (103) an die Hauptleitung (103) angeschlossen ist.

12. Fischlift nach Anspruch 1, 2, 3, 4, 5, 6, 7, 8, 9, 10 oder 11, **dadurch gekennzeichnet, dass** die in der Bypass-Leitung (105) angeordneten, druckreduzierenden Mittel (106) eine Turbine und einen von dieser angetriebenen Generator umfassen.

13. Verfahren zum Betrieb eines entsprechend dem Anspruch 1 ausgebildeten Fischlifts, **dadurch gekennzeichnet,**
- **dass** zum Anheben des Behälters (7) aus der unteren Stellung (S5) in die obere Stellung die ersten Sperrmittel (104) der Zuflusseinrichtung (101) geöffnet werden und
- **dass** bei in der unteren Stellung (S5) befindlichem Behälter (7) zum Herstellen einer Lockströmung (L5) die ersten Sperrmittel (104) geschlossen werden und aus dem Oberwasser (3) Wasser über die Bypass-Leitung (105) und die darin angeordneten druckreduzierenden Mittel (106) in den Schacht geleitet wird,
- **dass** es insbesondere vorgesehen ist, dass ein zweites Sperrmittel (107), durch welches die Bypass-Leitung (105) verschließbar ist, immer dann, wenn eine Lockströmung (L5) herzustellen ist, von einem dem zweiten Sperrmittel (107) zugeordneten Stellglied mittels eines Reglers in Abhängigkeit von einer von einer Messeinrichtung erfassten Fließgeschwindigkeit der Lockströmung so eingestellt wird,
- **dass** es insbesondere vorgesehen ist, dass eine vorgegebene Fließgeschwindigkeit konstant gehalten wird, wobei es besonders bevorzugt vorgesehen ist, dass eine tatsächliche Öffnungsstellung des zweiten Sperrmittels (107) durch eine Erfassungseinrichtung erfasst wird und an den Regler geleitet wird.

## Claims

1. Fish lift (1) for transporting fish (2) between a headwater (3) of a barrage (4) and a tailwater (5) of the barrage (4), comprising
- a shaft (6) and a container (7),
- wherein the shaft (6) comprises a lower opening (10), located below a level (N5) of the tailwater (5), with a lower lock entrance (11),
- wherein the container (7) is movable between an upper position (S3) and a lower position (S5),
- wherein the container (7) is in the form of a floating container (7a), which takes up its positions (S3; S35) in the shaft (6) depending on a water level in the shaft (6),
- wherein the container (7) is lowered by drainage of water from a water volume (V6) enclosed in the shaft (6) or wherein the container (7) is raised by inflow of water into the water volume (V6) enclosed in the shaft (6),
- wherein the inflow of water takes place by means of an inflow device (101),
- wherein the inflow device (101) comprises a line system (102),
- wherein the line system (102) is connected to the headwater (3) and comprises a main line (103), which leads into the shaft (6),
- wherein the inflow device (101) comprises first blocking means (104), a bypass line (105) and pressure-reducing means (106),
- wherein the first blocking means (104) are arranged in the main line (103) and wherein the bypass line (105) is arranged such that first blocking means (104) arranged in the main line (103) are able to be bypassed thereby, and
- wherein the pressure-reducing means (106) are arranged in the bypass line (105), **characterized in that** the pressure-reducing means (106) comprise at least two expansion chambers (106a, 106b), wherein a cross-sectional area, measured orthogonally to a direction of flow (SR), of the first expansion chamber (A106a) is at least three times as large as a cross-sectional area (A114b), measured orthogonally to the direction of the flow (SR), of an end portion (114b), leading into the first expansion chamber (106a), of a bypass supply pipe (114) .

2. Fish lift according to Claim 1, **characterized in that** a cross-sectional area (A106b), measured orthogonally to a direction of flow (SR), of the second expansion chamber (106b) is at least twice as large as the cross-sectional area (A106a), measured orthogonally to the direction of flow (SR), of the first expansion chamber (106a), wherein the second expansion chamber (106b) leads into an initial portion (115a) of a bypass drainpipe (115).

3. Fish lift according to Claim 1 or 2, **characterized in that** the main line (103) of the inflow device (101) comprises a water-feeding supply pipe (116), wherein the bypass line (105) comprises the bypass supply pipe (114) and the bypass drainpipe (115), wherein the bypass line (105) branches off from the supply pipe (116) with the bypass supply pipe (114), wherein the supply pipe (116) is connected to an inlet (104a) of the first blocking means (104) and wherein the supply pipe (116) has a diameter (D116) which is at least twice a diameter (D114) of the bypass supply pipe (114).

4. Fish lift according to Claim 1, 2 or 3, **characterized in that** the main line (103) of the inflow device (101) comprises a water-discharging drainpipe (117), wherein the bypass line (105) comprises the bypass supply pipe (114) and the bypass drainpipe (115), wherein the bypass line (105) leads into the drainpipe (117) with the bypass drainpipe (115), wherein the drainpipe (117) is connected to an outlet (104b) of the first blocking means (104) and wherein the drainpipe (117) and the bypass drainpipe (115) each have a diameter (D117 and D115, respectively) which corresponds to a diameter (D116) of the supply pipe (116) of the main line (103).

5. Fish lift according to Claim 1, 2, 3 or 4, **characterized in that** the inflow device (101) comprises second blocking means (107), wherein the second blocking means (107) are arranged in the bypass line (105) and in particular in the bypass supply line (114), **in that** provision is made in particular for the inflow device (101) to comprise an actuator assigned to the second blocking means, a regulator and a measuring device for recording a flow rate of the attraction flow (L5), wherein provision is made in particular for the regulator to be connected to the actuator and the measuring device such that said regulator outputs regulating data to the actuator on the basis of measurement data from the measuring device, wherein, provision is particularly preferably made for the inflow device (101) also to comprise a recording device which records an actual open position of the second blocking means (107) and is connected to the regulator for the transfer of opening data.

6. Fish lift according to Claim 1, 2, 3, 4 or 5, **characterized in that** the first blocking means (104) and/or the second blocking means (107) are in the form of gate valves.

7. Fish lift according to Claim 1, 2, 3, 4, 5 or 6, **characterized in that** a cross-sectional area (A114), measured orthogonally to a direction of flow (SR), of the bypass supply pipe (114) is less than 1/5 of a cross-sectional area (A116), measured orthogonally to the direction of flow (SR), of the supply pipe (116) of the main line (103).

8. Fish lift according to Claim 5, 6 or 7, **characterized in that** the first and the second blocking means (104, 107) and the pressure-reducing means (106) are arranged at a height of a lower third of the shaft (6) .

9. Fish lift according to Claim 1, **characterized in that** the line system (102) leads into the shaft (6) and/or into a swim-in zone (21) of the tailwater beneath a level (N5) of the tailwater (5).

10. Fish lift according to Claim 9, **characterized in that** the line system (102) leads into the shaft (6) such that water that flows through the drainpipe (117) of the main line (103) passes through a guide water nozzle (35) of the shaft (6) and passes through a transport chamber (14) of the container (7) when the latter is in its lower position (S5).

11. Fish lift according to Claim 9 or 10, **characterized in that** a guide water line (112) that leads into the swim-in zone (21) of the tailwater (5)
- is connected to the main line (103) either between the line entrance (103a) of the main line (103) and the first blocking means (104)
- or is connected to the main line (103) between the first blocking means (104) and the line exit (103b) of the main line (103).

12. Fish lift according to Claim 1, 2, 3, 4, 5, 6, 7, 8, 9, 10 or 11, **characterized in that** the pressure-reducing means (106) arranged in the bypass line (105) comprise a turbine and a generator driven thereby.

13. Method for operating a fish lift configured according to Claim 1, **characterized**
- **in that**, in order to raise the container (7) from the lower position (S5) into the upper position, the first blocking means (104) of the inflow device (101) are opened, and
- **in that**, with the container (7) located in the lower position (S5), in order to establish an attraction flow (L5), the first blocking means (104) are closed and water is guided from the headwater (3) into the shaft via the bypass line (105) and the pressure-reducing means (106) arranged therein,
- **in that** provision is made in particular for a second blocking means (107), by means of which the bypass line (105) is closable, whenever an attraction flow (L5) is to be established, to be set by an actuator, assigned to the second blocking means (107), by means of a regulator, depending on a flow rate of the attraction flow that is recorded by a measuring device, such
- that provision is made in particular for a predetermined flow rate to be kept constant, wherein provision is particularly preferably made for an actual open position of the second blocking means (107) to be recorded by a recording device and passed to the regulator.

## Revendications

1. Ascenseur à poissons (1) destiné au transport de poissons (2) entre un bief amont (3) d'un barrage (4) et un bief aval (5) du barrage (4), comprenant
- un puits (6) et un bac (7),
- le puits (6) comprenant une ouverture (10) inférieure, située au-dessous d'un niveau (N5) du bief aval (5), avec une entrée d'écluse (11) inférieure,
- le bac (7) pouvant être déplacé entre une position supérieure (S3) et une position inférieure (S5),
- le bac (7) étant constitué en tant que bac flottant (7a) qui occupe ses positions (S3 ; S35) dans le puits (6) en fonction d'un niveau d'eau de puits présent dans le puits (6),
- le bac (7) étant abaissé par écoulement d'eau à partir d'un volume d'eau (V6) inclus dans le puits (6), ou le bac (7) étant relevé par alimentation en eau dans le volume d'eau (V6) inclus dans le puits (6),
- l'alimentation en eau s'effectuant au moyen d'un dispositif d'alimentation (101),
- le dispositif d'alimentation (101) comprenant un système de conduites (102),
- le système de conduites (102) étant raccordé au bief amont (3) et comprenant une conduite principale (103) qui débouche dans le puits (6),
- le dispositif d'alimentation (101) comprenant des premiers moyens de blocage (104), une conduite de dérivation (105) et des moyens de réduction de pression (106),
- les premiers moyens de blocage (104) étant disposés dans la conduite principale (103), et la conduite de dérivation (105) étant disposée de telle sorte qu'elle permet de contourner les premiers moyens de blocage (104) disposés dans la conduite principale (103), et
- les moyens de réduction de pression (106) étant disposés dans la conduite de dérivation (105), **caractérisé en ce que** les moyens de réduction de pression (106) comprennent au moins deux chambres d'expansion (106a, 106b), une surface de section transversale, mesurée à angle droit par rapport à une direction d'écoulement (SR), de la première chambre d'expansion (A106a) étant au moins trois fois plus grande qu'une surface de section transversale (A114b), mesurée à angle droit par rapport à la direction d'écoulement (SR), d'un tronçon d'extrémité (114b) d'un tube d'amenée-de dérivation (114) débouchant dans la première chambre d'expansion (106a).

2. Ascenseur à poissons selon la revendication 1, **caractérisé en ce qu'**une surface de section transversale (A106b), mesurée à angle droit par rapport à une direction d'écoulement (SR), de la deuxième chambre d'expansion (106b) est au moins deux fois plus grande que la surface de section transversale (A106a), mesurée à angle droit par rapport à la direction d'écoulement (SR), de la première chambre d'expansion (106a), la deuxième chambre d'expansion (106b) débouchant dans un tronçon de début (115a) d'un tube d'évacuation-de dérivation (115).

3. Ascenseur à poissons selon la revendication 1 ou 2, **caractérisé en ce que** la conduite principale (103) du dispositif d'alimentation (101) comprend un tube d'amenée (116) acheminant de l'eau, la conduite de dérivation (105) comprenant le tube d'amenée-de dérivation (114) et le tube de d'évacuation-de dérivation (115), la conduite de dérivation (105) avec le tube d'amenée-de dérivation (114) bifurquant du tube d'amenée (116), le tube d'amenée (116) étant raccordé à une entrée (104a) des premiers moyens de blocage (104), et le tube d'amenée (116) comportant un diamètre (D116) qui est au moins égal à deux fois un diamètre (D114) du tube d'amenée-de dérivation (114).

4. Ascenseur à poissons selon la revendication 1, 2 ou 3, **caractérisé en ce que** la conduite principale (103) du dispositif d'alimentation (101) comprend un tube d'évacuation (117) évacuant de l'eau, la conduite de dérivation (105) comprenant le tube d'amenée-de dérivation (114) et le tube de d'évacuation-de dérivation (115), la conduite de dérivation (105) avec le tube de d'évacuation-de dérivation (115) débouchant dans le tube d'évacuation (117), le tube d'évacuation (117) étant raccordé à une sortie (104b) des premiers moyens de blocage (104), et le tube d'évacuation (117) et le tube de d'évacuation-de dérivation (115) comportant respectivement un diamètre (D117 ou respectivement D115) qui correspond à un diamètre (D116) du tube d'amenée (116) de la conduite principale (103).

5. Ascenseur à poissons selon la revendication 1, 2, 3 ou 4, **caractérisé en ce que** le dispositif d'alimentation (101) comprend des deuxièmes moyens de blocage (107), les deuxièmes moyens de blocage (107) étant disposés dans la conduite de dérivation (105) et en particulier dans le tube d'amenée-de dérivation (114), **en ce qu'**il est en particulier prévu que le dispositif d'alimentation (101) comprend un actionneur affecté au deuxième moyen de blocage, un régulateur et un dispositif de mesure destiné à la détection d'une vitesse d'écoulement du débit d'attrait (L5), étant en particulier prévu que le régulateur est raccordé à l'actionneur et au dispositif de mesure de telle sorte qu'il délivre à l'actionneur des données de régulation en fonction des données de mesure du dispositif de mesure, étant prévu de façon particulièrement préférée que le dispositif d'alimentation (101) comprend également un dispositif de détection qui détecte une position d'ouverture effective du deuxième moyen de blocage (107) et est raccordé au régulateur pour la remise de données d'ouverture.

6. Ascenseur à poissons selon la revendication 1, 2, 3, 4 ou 5, **caractérisé en ce que** les premiers moyens de blocage (104) et/ou les deuxièmes moyens de blocage (107) sont constitués en tant que coulisseaux de blocage.

7. Ascenseur à poissons selon la revendication 1, 2, 3, 4, 5 ou 6, **caractérisé en ce qu'**une surface de section transversale (A114) du tube d'amenée-de dérivation (114) mesurée à angle droit par rapport à une direction d'écoulement (SR) est égale à moins de 1/5^{ème} d'une surface de section transversale (A116), mesurée à angle droit par rapport à la direction d'écoulement (SR), du tube d'amenée (116) de la conduite principale (103).

8. Ascenseur à poissons selon la revendication 5, 6 ou 7, **caractérisé en ce que** les premiers et deuxièmes moyens de blocage (104, 107) et les moyens de réduction de pression (106) sont disposés à une hauteur d'un tiers inférieur du puits (6).

9. Ascenseur à poissons selon la revendication 1, **caractérisé en ce que** le système de conduites (102) débouche, au-dessous d'un niveau (N5) du bief aval (5), dans le puits (6) ou dans une zone d'entrée de nage (21) du bief aval.

10. Ascenseur à poissons selon la revendication 9, **caractérisé en ce que** le système de conduites (102) débouche dans le puits (6) de telle sorte que l'eau qui s'écoule dans le tube d'évacuation (117) de la conduite principale (103) traverse une buse à eau directrice (35) du puits (6) et s'écoule à travers une chambre de transport (14) du bac (7) quand celui-ci est dans sa position inférieure (S5).

11. Ascenseur à poissons selon la revendication 9 ou 10, **caractérisé en ce qu'**une conduite d'eau directrice (112), qui débouche dans la zone d'entrée de nage (21) du bief aval (5),
- soit est raccordée à la conduite principale (103) entre l'entrée de conduite (103a) de la conduite principale (103) et les premiers moyens de blocage (104)
- soit est raccordée à la conduite principale (103) entre les premiers moyens de blocage (104) et la sortie de conduite (103b) de la conduite principale (103).

12. Ascenseur à poissons selon la revendication 1, 2, 3, 4, 5, 6, 7, 8, 9, 10 ou 11, **caractérisé en ce que** les moyens de réduction de pression (106) disposés dans la conduite de dérivation (105) comprennent une turbine et un générateur entraîné par celle-ci.

13. Procédé de fonctionnement d'un ascenseur à poissons constitué conformément à la revendication 1, **caractérisé en ce que**
- pour le relèvement du bac (7) à partir de la position inférieure (S5) vers la position supérieure, les premiers moyens de blocage (104) du dispositif d'alimentation (101) sont ouverts, et
- **en ce que**, quand le bac (7) se trouve dans la position inférieure (S5), pour l'établissement d'un débit d'attrait (L5), les premiers moyens de blocage (104) sont fermés et, à partir du bief amont (3), de l'eau est conduite dans le puits via la conduite de dérivation (105) et les moyens de réduction de pression (106) qui y sont disposés,
- **en ce qu'**il est en particulier prévu qu'un deuxième moyen de blocage (107), qui permet de fermer la conduite de dérivation (105) à chaque fois qu'un débit d'attrait (L5) doit être établi, est réglé par un actionneur affecté au deuxième moyen de blocage (107) au moyen d'un régulateur en fonction d'une vitesse d'écoulement du débit d'attrait détectée par un dispositif de mesure de telle sorte que
- qu'il est en particulier prévu qu'une vitesse d'écoulement prescrite est maintenue constante, étant en particulier prévu de façon particulièrement préférée qu'une position d'ouverture effective du deuxième moyen de blocage (107) est détectée par un dispositif de détection et conduite au régulateur.
